# EUROPEAN PATENT APPLICATION

(11) **EP 3 420 861 A1**
(43) Date of publication of application: **02.01.2019**
(21) Application number: 17179151.0
(22) Date of filing: 30.06.2017
(51) Int. Cl.: A47J 31/44

(54) **COFFEE MACHINE DRIP TRAY**

(71) Applicant: BSH Hausgeräte GmbH, 81739 München (DE)
(72) Inventor: Drobez, Iztok, 3313 Polzela (SI); Lemez, Samo, 3327 Smartno ob Paki (SI); Semprimoznik, Ales, 3330 Mozirje (SI)

(57) **Abstract**

A fully automatic coffee machine (10) having a water tank, a pump, a brewing unit, a heater, a steam relief unit and a drainage system and a drip tray (20) with a deepen area (21) wherein the drip tray (20) is equipped with a cover (30) comprising a cap (31) which covers a water outlet (22) area and a collar (32) which covers the deepen area (21) of the drip tray (20) and which is placed at the bottom of said drip tray (20).

The present invention provides a simple cover which is responsible for preventing unwanted smell from a drainage pipe to get into a coffee machine which is not acceptable for consumers. The cover is cheap and its production can be performed in easy and fast way during one injection moulding process.

## Description

The present invention relates to a fully automatic coffee machine having a water tank, a pump, a brewing unit, a heater, a steam relief unit and a drainage system and a drip tray with a deepen area wherein the drip tray is equipped with a cover comprising a cap which covers a water outlet area and a collar which covers the deepen area of the drip tray and which is placed at the bottom of said drip tray.

Recently, beverage brewing devices which introduce a high degree of automation to the beverage brewing process have been produced. Such automatic coffee machines are known in the state of the art. An automatic coffee machine is a device for the personal and commercial use in which all steps of the coffee preparation cycle occur automatically, especially grinding coffee beans, introduction the ground coffee into the heating chamber, brewing and serving the beverage and also removing the waste water and small particles of coffee automatically by the drainage pipe to the sewage system e.g. sewage installation in a kitchen. Typically the drainage pipe is a U-bend shape tube connected to a reservoir. The reservoir e.g. a drip tray is filled to an overflow level, and the inlet and outlet of the U-bend are located above this overflow level. Thus, the liquid in the reservoir blocks unwanted smell passing from the outlet to the inlet. The walls of the U-bend block the passage of smells from the outlet to the environment external to the U-bend. However, the U-bend leads to a bulky apparatus, as the dimensions of the apparatus are determined by the dimensions of the U-bend. Siphons have been used for many years to guide waste water from sinks or full automatic kitchen machines to sewage ducts.

It is desirable to provide a coffee machine connected with the sewage system by a simple and compact drainage pipe without U-bend siphon, simultaneously avoiding its disadvantages e.g. when bad smell from the sewage system is getting inside the coffee machine.

The patent application US 53 95 515 A, discloses a tray assembly for use in receiving and retaining used moist brewing substances and the like from a beverage brewing apparatus and separating a liquid portion therefrom. The tray assembly is in communication with an entry port which deposits moist brewing substances therein. A drain line in the brewing apparatus carries separated liquids away from said tray assembly. The tray assembly includes a tray body, a liquid separation portion retained in said tray body for drawing off liquids from moist brewing substances, and a controllably sealable tray valve assembly attached to the tray body and operatively engaging the drain line for draining liquids from the tray assembly. A first area in the tray body between the entry port and the liquid separation portion communicates with the entry port and defines a receiving and retaining space. A second area in the tray body between the liquid separating portion and the valve assembly communicates with the tray valve assembly and defines a liquid collection space. Drained brewing substance is retained in the receiving and retaining space for removal at a later time. Liquid drawn off of the brewing substance into the liquid collection space flows from the tray assembly out through the tray valve assembly when engaged with the drain line.

The patent application CN 10 52 86 643 A relates to a waste water drainage structure of a coffee machine. A waste water discharge port is formed in the outer wall of a brewing cavity of the coffee machine. The waste water drainage structure of the coffee machine is characterized in that the waste water drainage structure comprises an upper cover body and a lower cover body, a pipeline for circulating waste water is formed after the upper cover body and the lower cover body are oppositely combined, the portion, at one end of the pipeline, of the upper cover body is provided with a water inlet communicated with the waste water discharge port, and the lower cover body at the other end of the pipeline is provided with a water outlet for discharging waste water. The pipeline formed by oppositely combining the upper cover body and the lower cover body is used for replacing a water drainage pipe in the prior art, due to the fact that the waste water drainage pipeline of the waste water drainage structure is provided with a smooth bottom face and will not be bent in the coffee machine, the inner diameter of the pipeline will not change, and therefore it can be guaranteed that waste water is smoothly discharged, and the problem that a waste water discharging pipe in the prior art can be easily blocked by coffee powder and the like is avoided; meanwhile, the waste water drainage structure is simple and reasonable and convenient to install and use.

In the presented solutions the problem of existing of bad smell in the coffee maker coming from the drainage pipe can occur. Even the coffee maker is connected with the sewage system by the siphon and the siphon works properly some remaining of a small coffee particles and dirt inside the drainage pipe can cause bad smell which is not acceptable for the user.

It is the object of the present invention to overcome problems associated with bad smell inside the automatic brewers drainage installation system and provide an invention for blocking bad smell inside the automatic coffee machine connected to the sewage system which is not equipped with a siphon.

This object is solved by a coffee machine drip tray whereby the drip tray is equipped with a cover comprising a cap which covers a water outlet area and a collar which covers a deepen area of the drip tray and which is placed at the bottom of said drip tray.

A coffee machine is a device designed for performing brewing process. The coffee machine is equipped with a drip tray.

The drip tray is placed at the bottom of the coffee machine body and its main function is to collect liquids - water and beverage generated during the brewing process during normal use. The drip tray is made out of high temperature resistance material a drawer shape having protrusions making the drip tray operation easy and comfortable for the user. The drip tray is equipped with a water capacity sensor which is activated when the waste water level is too high to ensure safe operation of the coffee machine. Activation of the water capacity sensor brings the information to the user about the necessity of the drainage system unclogging. To perform the drainage process automatically the rear wall of the drip tray is equipped with at least one water outlet for receiving the drainage pipe. The pure water drops directly to the drip pan from where is removed by the drainage pipe through the waste water outlet. The positive effect is that the user is not involved with the drip tray emptying process each time the beverage is prepared. The drainage system contains simple elements like waste water outlet placed on the rear side of the drip tray and the drainage part e.g. simple elastic drainage pipe which connects the waste water outlet of the drip tray with the sewage system. The pipe is directed downwardly the sewage system and uses gravity effect to drain the waste water from the drip tray.

The waste water outlet is simple hollow and the drain pipe is connected to the outlet and sealed to provide watertight connection.

The drip tray is equipped also with a cover made out of plastic or other material and being detachably connected to the drip tray. The cover consists of a rear wall with cap for covering the water outlet and a collar for covering the deepen area of the drip tray.

The shape of the cap is squared, rectangular, oval or irregular and preferably convex.

The collar is connected with the cap and constitutes one part which covers the deepen area of the drip tray. The collar and the cap can be produced as two separate parts. The collar is provided to cover the deepen area and prevent the water collected in said deepen area from evaporation. The existence of the water in the deepen area is important because it prevents bad smells from the drainage pipe to get into the coffee machine. The water is a natural barrier for bad smells that is why it is important to provide solution which preserves the water in the deepen area of the drip tray constantly.

It is to be understood that both the foregoing general description and the following detailed description are exemplary, and are intended to provide further explanation of the invention as claimed. Other advantages and features of the invention will be apparent from the following description, drawings and claims.

In the preferred embodiment of the invention a cover is detachably mounted on a drip tray by at least one guiding element of the drip tray. Advantageously there are two guiding elements to provide firmly connection between a rear wall of the cover and the drip tray. The guiding elements are placed on the rear wall of the drip tray in close position to a water outlet. The guiding element of the drip tray cooperates with the rear wall of the cover and makes the attachment and detachment of the cover possible. The cover can be detached from the drip tray for cleaning purpose or to unclog the water outlet.

In another embodiment of the invention a rear wall of a cover has a holding protrusion. The holding protrusion is provided to ease the process of connection and disconnection the cover with the drip tray.

The present invention provides a simple cover which is responsible for preventing unwanted smell from a drainage pipe to get into a coffee machine which is not acceptable for consumers. The cover is cheap and its production can be performed in easy and fast way during one injection moulding process.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings. Further benefits and advantages of the present invention will become apparent after a careful reading of the detailed description with appropriate reference to the accompanying drawings.

In the drawings:
- Fig. 1: exemplary shows a coffee machine isometric view;
- Fig. 2: shows a drip tray with a cover in isometric view;
- Fig. 3: shows a cross section of the cover and the drip tray in a demounted state;
- Fig. 4: shows a cross section of the cover and the drip tray in a mounted state;

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

The automatic coffee machines have a body comprising a coffee grinder, a removable water reservoir, a pump, a brewing unit, a heater, a steam relief unit, a milk frothing unit and a coffee outlet and also sensors, valves to automate the brewing process. Such coffee machines can have also a drainage system for waste water and other fluids disposal.

Clear, cold water from the water reservoir is delivered by the pump to the heater which heats the water to the desirable brewing temperature. Then the hot water is forcing by the pressure to go through ground coffee beans and flows through the coffee outlet to the cup. The steam created during the brewing process is released by the steam relief unit to the drip tray.

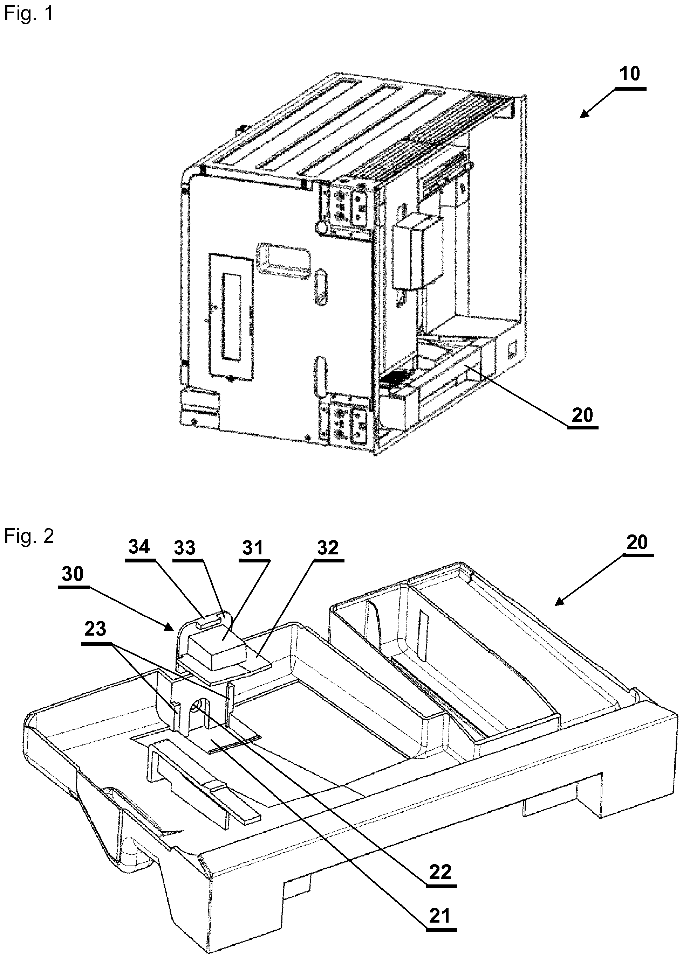

Fig. 1 shows an isometric view of a coffee machine 10 with visible drip tray 20 and a coffee outlet. The drip tray 20 is a drawer shaped temporary reservoir for waste water. The drip tray 20 can be detached from the coffee machine 10 body and special holding protrusions 34 in the front of the drip tray 20 are provided to easy handle the drip tray 20 to perform cleaning activities. The drip tray 20 is placed at the bottom of the coffee machine 10.
The coffee machine 10 has also a removable water tank and many components like a pump, a brewing unit, a heater, a steam relief unit, a milk frothing unit, sensors, valves etc. which are not shown on the figure but existence of which is necessary to carry out the brewing process.

Fig. 2 shows a drip tray 20 with a with a cover 30 in isometric view.
The cover 30 is placed inside the body of the drip tray 20 near the waste water outlet 22. The cover 30 is an element consist of a rear wall 33 a cap 31 and a collar 32. The rear wall 33 of the cover 30 is provided with a holding protrusion 34 which is an element which helps positioning the cover 30 inside the drip tray 20. The cap 31 covers the waste water outlet 22 and the collar 32 extends above a deepen area 21 of the drip tray 20. The drip tray 20 bottom has the deepen area 21 to collect waste water. The collected waste water acts as a barrier for the bad smell coming from the drainage pipe (which is shown on the pictures 3 and 4) which is connected with the sewage system. The cover 30 can be attached to the drip tray 20 by the rear wall 33 cooperating with two guiding elements 23 placed near the waste water outlet 22 and the deepen area 21. The figure show the drip tray 20 and the cover 30 in a demounted state.

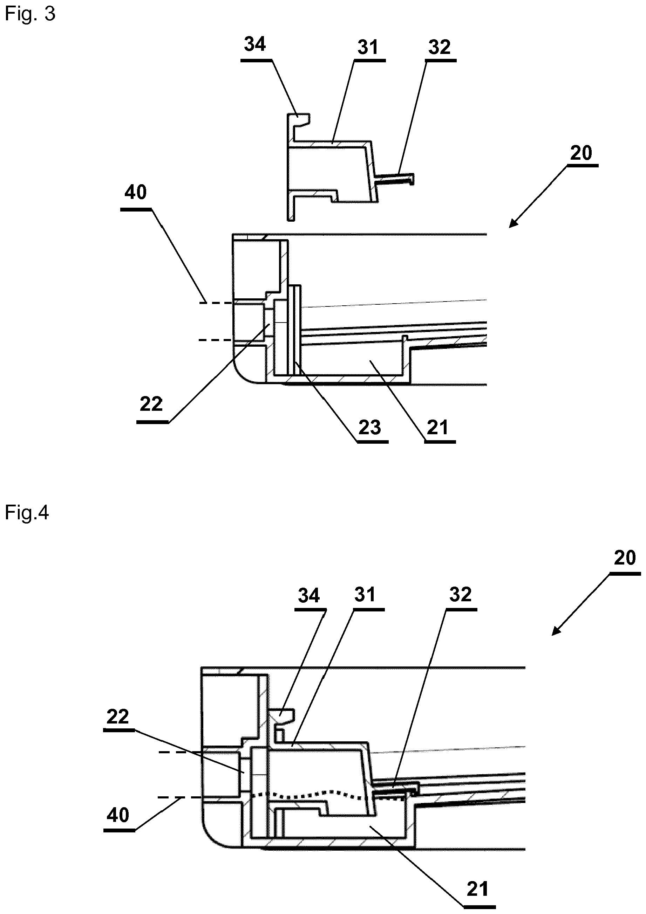

Fig. 3 shows a cross section of the cover 30 and the drip tray 20 in a demounted state. The waste water outlet 22 is connected to the sewage system by the drainage pipe 40 so the waste disposal process is performed by the gravity outside the coffee machine 10. The connection between the waste water outlet 22 and the drainage pipe 40 is sealed what provide safe usage by the user.

Fig. 4 shows a cross section of the cover 30 and the drip tray 20 in a mounted state. The cover 30 is connected with the drip tray 20 by the guiding elements 23 covering the deepen area 21 totally therefore evaporation of the collected waste water is greatly limited. The level of the waste water is shown by the dotted line.

The present invention provides a simple cover which is responsible for preventing unwanted smell from a drainage pipe to get into a coffee machine which is not acceptable for consumers. The cover is cheap and its production can be performed in easy and fast way during one injection moulding process.

### LIST OF REFERENCE SIGNS

- 10: coffee machine

- 20: drip tray
- 21: deepen area
- 22: water outlet
- 23: guiding element

- 30: cover
- 31: cap
- 32: collar
- 33: rear wall
- 34: holding protrusion

- 40: drainage pipe

## Claims

1. A fully automatic coffee machine (10) having a water tank, a pump, a brewing unit, a heater, a steam relief unit and a drainage system and a drip tray (20) with a deepen area (21) **characterized in that** the drip tray (20) is equipped with a cover (30) comprising a cap (31) which covers a water outlet (22) area and a collar (32) which covers the deepen area (21) of the drip tray (20) and which is placed at the bottom of said drip tray (20).

2. The fully automatic coffee machine (10) according to claim 1, **characterized in that** the cover (30) is detachably mounted on the drip tray (20) by at least one guiding element (23) of the drip tray (20).

3. The fully automatic coffee machine (10) according to any of preceding claims, **characterized in that** a rear wall (33) of the cover (30) has a holding protrusion (34).
